# EUROPÄISCHE PATENTSCHRIFT

(11) **EP 1 198 915 B1**
(45) Veröffentlichungstag und Bekanntmachung des Hinweises auf die Patenterteilung: **08.08.2007**
(21) Anmeldenummer: 00960327.5
(22) Anmeldetag: 28.07.2000
(51) Int. Cl.: H04L 1/00, H04L 25/02, H04L 5/14

(54) **VERFAHREN ZUM OPTIMIEREN DER DATENÜBERTRAGUNG ÜBER LEITUNGEN**
METHOD FOR OPTIMIZING THE TRANSMISSION OF DATA VIA LINES
PROCEDE PERMETTANT D'OPTIMISER LA TRANSMISSION DE DONNEES PAR DES LIGNES

(30) Priorität: 30.07.1999 DE 19935997
(43) Veröffentlichungstag der Anmeldung: 24.04.2002
(73) Patentinhaber: SIEMENS AKTIENGESELLSCHAFT, 80333 München (DE)
(72) Erfinder: GIECK, Reiner, D-82110 Germering (DE)
(86) Internationale Anmeldenummer: PCT/DE2000/002505
(87) Internationale Veröffentlichungsnummer: WO 2001/010074

(56) Entgegenhaltungen:
- EP-A- 0 806 852
- WO-A-98/10545
- WO-A-98/59426
- US-A- 5 914 993
- OTSUKI S ET AL: "PERFORMANCE OF MODULATION-LEVEL-CONTROLLED ADAPTIVE MODULATION SYSTEMS" ELECTRONICS & COMMUNICATIONS IN JAPAN, PART I - COMMUNICATIONS,US,SCRIPTA TECHNICA. NEW YORK, Bd. 79, Nr. 7, 1. Juli 1996 (1996-07-01), Seiten 81-93, XP000696376 ISSN: 8756-6621

## Beschreibung

Im Anschlussbereich von Kommunikationssystemen bzw. in Zubringernetzen von Kommunikationsnetzen werden für die Übertragung von Daten - beispielsweise digitalisierte Sprachinformationen oder Internet-Dateninformationen - über Leitungen - insbesondere 2-Draht- oder 4-Draht-Leitungen - unterschiedliche Übertragungsverfahren eingesetzt. Häufig eingesetzte Übertragungsverfahren stellen das Basisband-Übertragungsverfahren und Einträger- sowie Mehrträgerfrequenzverfahren dar. Bei einer bidirektionalen Datenübertragung über 2-Draht-Leitungen sind zusätzlich Echokompensationsverfahren erforderlich. In Modems werden häufig Ein- oder Mehrträgerfrequenzverfahren eingesetzt, wobei bei den einzelnen Trägerfrequenzen in Abhängigkeit von den zu erreichenden Übertragungsgeschwindigkeiten entsprechende Modulationsverfahren - insbesondere das Phasenmodulationsverfahren - vorgesehen sind.

Bei den Modems wird von einer vorgegebenen Übertragungsgeschwindigkeit ausgegangen, die bei einer vorübergehenden Störung - bewirkt eine starke Verminderung der Übertragungsqualität - reduziert wird. Nachdem die Störung beseitigt bzw. aufgehoben ist, wird die ursprüngliche Übertragungsgeschwindigkeit wieder eingestellt.

In EP 0 806 852 ist ein Verfahren zum Optimieren der Datenübertragung über Leitungen beschrieben. Die Optimierung erfolgt im Rahmen von vor der eigentlichen Datenübertragung zwischen zwei Modems stattfindenden Verhandlungen, wobei derartige Verhandlungen sowohl die Auswahl eines Übertragungsverfahrens als auch die Auswahl der entsprechenden Übertragungsgeschwindigkeit umfassen.

IN WO 98/10545 ist ebenfalls ein Verfahren zum Optimieren der Datenübertragung über Leitungen offenbart, bei dem Leitungseigenschaften ermittelt und in Abhängigkeit von den Ermittlungsergebnissen die maximale Datenrate ausgewählt wird.

Die der Erfindung zugrunde liegende Aufgabe besteht darin, die Übertragung über Leitungen - insbesondere Anschlussleitungen zu Kommunikationseinrichtungen - zu verbessern. Die Aufgabe wird durch ein Verfahren gemäß den Merkmalen des Anspruchs 1, durch eine Übertragungseinheit gemäß den Merkmalen des Patentanspruchs 9 sowie durch eine Kommunikationsanordnung gemäß den Merkmalen des Patentanspruchs 10 gelöst.

Der wesentliche Aspekt des erfindungsgemäßen Verfahrens ist darin zu sehen, dass für unterschiedliche gespeicherte Leitungsparameter von Leitungen zumindest ein Übertragungsverfahren mit einer die maximale Datendurchsatzrate repräsentierenden Übertragungsgeschwindigkeit ermittelt und gespeichert wird. Bei einer aktuellen Datenübertragung über eine Leitung werden deren Leitungsparameter gemessen und dasjenige Übertragungsverfahren mit derjenigen Übertragungsgeschwindigkeit ausgewählt, bei dem die größte Überstimmung der gemessenen mit den gespeicherten Leitungsparametern festgestellt wird. Hierbei sind die Leitungsparameter durch die Dämpfung und Laufzeit der Leitung und durch Störsignale auf einer Leitung repräsentiert - Anspruch 2.

Der wesentliche Vorteil des erfindungsgemäßen Verfahrens ist darin zu sehen, daß durch die Ermittlung der maximalen Datendurchsatzrate für die jeweilige Leitung eine optimale Nutzung einer Leitung bzw. Anschlußleitung erreicht wird, da der maximale Datendurchsatz bei einer fehlerfreien Datenübertragung vom Übertragungsverfahren abhängig ist, das über eine vorgegebene Leitung bzw. Übertragungsleitung mit Störsignalen verwendet wird. Hierbei bedeutet die höchste Übertragungsgeschwindigkeit mit einem Übertragungsverfahren nicht gleichzeitig den größten Datendurchsatz.

Weitere vorteilhafte Ausgestaltungen des erfindungsgemäßen Verfahrens insbesondere hinsichtlich der Ermittlung der maximalen Datendurchsatzrate und der Leitungsparameter sowie der vorteilhaften Übertragungsverfahren sowie eine Übertragungseinheit und eine Kommunikationsanordnung sind den weiteren Ansprüchen zu entnehmen.

Im folgenden wird das erfindungsgemäße Verfahren anhand einer Zeichnung näher erläutert.

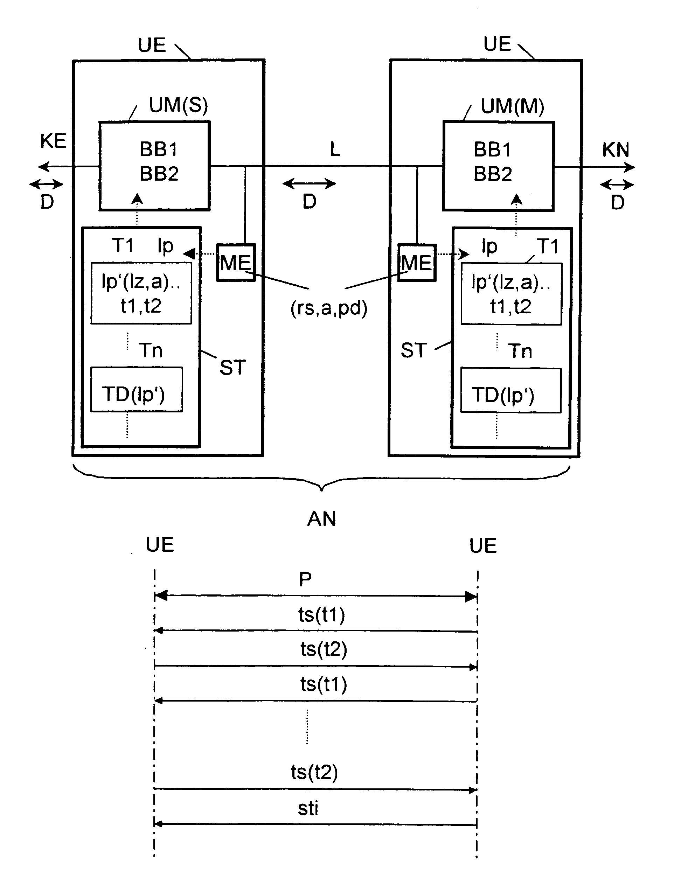

Die Zeichnung zeigt in einem Blockschaltbild ein Zubringernetz AN eines Kommunikationsnetzes KN, das beispielsweise ein ISDN-Kommunikationsnetz oder ein Datenkommunikationsnetz wie Internet repräsentiert. Im Zubringernetz AN ist eine zweidrähtige Leitung L angeordnet, an die an beiden Seiten eine Übertragungseinheit UE angeschlossen ist - beispielhaft ist eine von mehreren Leitungen dargestellt. In den Übertragungseinheiten UE ist jeweils ein mit der Leitung L und mit dem Kommunikationsendgerät KE verbundenes Übertragungsmodul UM angeordnet, wobei in dem Übertragungsmodul UM beispielsweise zwei Ubertragungsverfahren wie zwei unterschiedliche BasisBandverfahren BB1,BB2 mit Echokompensationsverfahren realisiert sind. Alternativ sind beispielsweise Ein- oder Mehrträgerfrequenzverfahren wie das OFDM-Übertragungsfahren möglich. Fur die Messung der Leitungsparameter lp der Leitung L ist in den Übertragungsmoduln UM eine mit der Leitung L und einer Steuereinheit ST verbundene Meßeinheit ME vorgesehen.

Im unteren Bereich ist zur Erläuterung des Informationsaustausches unter den Übertragungseinheiten UE jeweils eine diese Übertragungseinheiten UE repräsentierende strich-punktierte Linie angeordnet.

Zwischen den Übertragungsmodulen UM wird vor der Ermittlung der Leitungsparameter (lp) eine Präambel P übermittelt sowie eine Prozedur benutzt, um die beiden Übertragungsmodule UM auf die Meßprozedur einzustellen. Hierbei werden die Informationen der Präambel P sowie der Prozedur mit einer gegenüber der folgenden Meßprozedur geringen Übertragungsgeschwindigkeit und einem einfachen Übertragungsverfahren - beispielsweise zweistufige Phasendifferenzmodulation oder binäre Frequenzmodulation - übermittelt -, damit auch bei Leitungen L mit einer geringen Übertragungsqualität eine sichere Übermittlung der Informationen gewährleistet ist, wobei bei einer zweidrähtigen Leitung L das Echokompensationsverfahren abgeschaltet ist.

Die Messung der Leitungsparameter lp, d.h.die Meßprozedur kann wie folgt durchgeführt werden:
a) ein Übertragungsmodul UM wird als Master (M) bzw. als zentrales Übertragungsmodul UM(M) - vorteilhaft beim Kommuniaktionssystem KS - und das andere Übertragungsmodul UM als Slave (S) bzw. dezentrales Übertragungsmodul UM(S) bestimmt .
b) Es wird in beiden Übertragungsmodulen UM jeweils der Störbelag der Leitung L, d.h. das Grundrauschsignal ts mit Hilfe der Meßeinheit ME gemessen, hinsichtlich der Amplitude und der Frequenz analysiert und die Analyseergebnisse werden gespeichert. Aufgrund der Analyseergebnisse wird im Master (M) eine erste Auswahl für ein mögliches Übertragungsverfahren BB1, BB2 getroffen. Werden in dem Grundrauschsignal rs Signalfrequenzen mit hohem Pegel festgestellt, so wird zunächst ein Übertragungsverfahren BB1, BB2 gewählt, bei dem diese Signalfrequenzen nicht stören.
c) Mit Hilfe einer übertragenen Präambel P wird dem Slave (S) durch kodierte Informationen mitgeteilt, welches Übertragungsverfahren BB12,BB2 und welche Übertragungsgeschwindigkeit in der Meßprozedur vorgesehen ist.
d) Dem ausgewählten Übertragungsverfahren BB1,BB2 werden in beiden Übertragungsmodulen UM Tabellen T zugeordnet, die aus einer Mehrzahl von in den Übertragungsmodulen UM gespeicherten Tabellen Tl..Tn durch das aktuell verwendete Übertragungsverfahren BB1, BB2 ausgewählt werden.
e) Der Master (M) sendet ein Testsignal ts mit zwei Frequenzen und Amplituden für eine vorgegebene Zeitspanne t1 aus, wobei die Frequenzen und die Amplituden und die Zeitspannen durch die Tabelle T bestimmt sind.
f) Im Slave (S) werden die Amplituden a des empfangenen Testsignals ts frequenzindividuell und die Phasendifferenz pd der Frequenzen des Testsignal ts mit Hilfe der Meßeinheit ME gemessen. Aus der Phasendifferenz fd kann die Laufzeit lz ermittelt werden, die zusammen mit den Meßwerten der Amplituden a gespeichert werden.
g) Daraufhin wird vom Slave (S) ein wie vom Master (M) übermitteltes Testsignal ts für eine vorgegebene Zeitspanne t2 ausgesandt.
h) Im Master (M) werden nun ebenfalls frequenzindividuell die Amplituden a des Testsignals ts und die Phasendifferenz pd mit Hilfe der Meßeinheit ME gemessen sowie die Laufzeit lz ermittelt. Des weiteren wird das empfangene Testsignal ts im Hinblick auf die maximal zulässige Dämpfung überprüft. Liegt die Dämpfung darunter, so wird vom Master (M) ein weiteres Testsignal ts mit zwei Frequenzen und Amplituden für eine vorgegebene Zeitspanne t1 zum Slave S über die Leitung L übermittelt, wobei die Frequenzen und die Amplituden und die Zeitspannen t1,t2 wiederum durch die Tabelle T bestimmt sind.
i) Im Slave (S) wird wieder die unter g) und f) beschriebene Auswertung vorgenommen.

Die in e) bis h) beschriebenen Vorgänge werden solange wiederholt, bis alle in der zugeordneten Tabelle T angegebenen Frequenzen bzw. Frequenzpaare getestet sind. Auf diese Weise wird die Leitung L in einem Raster von Frequenzen ausgetestet. Hierbei wird vom Master (M) die Messung abgebrochen, sofern bei einer tabellengemäßen Frequenz des Testsignals ts dessen Dämpfung, d.h. die Leitungsdämpfung zu groß ist. Aufgrund einer beim Master (M) vorliegenden Entscheidungstabelle wird dem Slave (S) mitgeteilt, für welchen neue Übertragungsverfahren BB1,BB2 und mit welcher Übertragungsgeschwindigkeit die folgenden Messungen durchzuführen sind. Hier werden in den Übertragungsmodulen UM die Tabellen T ausgesucht und der Messung zugeordnet. Auf diese Weise werden mehrere Übertragungsverfahren BB1, BB2 und Übertragungsgeschwindigkeiten getestet und für eine Datenübertragung geeignete Frequenzbereiche und dazugehörige Übertragungsgeschwindigkeiten ermittelt.

Zur Ermittlung des Übertragungsverfahrens BB1, BB2 mit der maximalen Druchsatzrate werden die Analyseergebnisse mit Tabellen TD verglichen, in denen für verschiedene Übertragungsverfahren BB1,BB2 bei unterschiedlichen Übertragungsgeschwindigkeiten die Frequenzen bzw. Frequenzbereiche gespeichert sind, und diejenigen ermittelt, bei denen aufgrund ihres Spektrums möglichst geringe Dämpfungs- und Laufzeitverzerrungen auftreten. Ausgewählt werden diejenigen Übertragungsverfahren bzw. dasjenige Übertragungsverfahren, in deren getestetem Frequenzbereich die gemessene Dämpfung und Laufzeit lz die geringsten Schwankungen aufweisen und bei denen zusätzlich das gemessene Grundrauschsignal rs sich am geringsten auf die Durchsatzrate auswirkt. Die in den Tabellen gespeicherten Werte für die Vergleiche werden empirisch mit unterschiedlichsten Übertragungsverfahren und Leitungseigenschaften bei unterschiedlichen Frequenzen bzw. Frequenzbereichen an Testeinrichtungenen - beispielsweise in einer Versuchsanordnung - ermittelt. Die maximale Datendurchsatzrate kann der maximal möglichen Übertragungsgeschwindigkeit entsprechen, sie kann jedoch auch geringer sein, insbesondere bei starken Störsignalen bzw. Grundrauschen, bei denen ein wiederholtes Aussenden von gestört übermittelten Daten erforderlich ist. Dies bedeutet, daß eine optimale Übertragungsgeschwindigkeit ermittelt wird, bei der die Datendurchsatzrate maximal ist. Die maximale Datendurchsatzrate kann auch bei unterschiedlich gemessenen Leitungsparametern lp und unterschiedlichen Übertragungsverfahren BB1,BB2 durch beispielsweise Messung der Fehlerrate und Datenpaketwiederholungsrate bestimmt werden.

Nach der Auswahl des Übertragungsverfahrens BB1, BB2 wird an das Übertragungsmodul UM eine entsprechende Steuerinformation sti übermittelt und dort das ausgewählte Übertragungsverfahren BB1,BB2 eingestellt. Die Auswahl des geeigneten Übertragungsverfahrens BB1,BB2 mit der optimalen Übertragungsgeschwindigkeit kann bei jeder Inbetriebnahme der Übertragungseinheiten UE oder bei der erstmaligen Inbetriebnahme an einer Leitung L erfolgen.

Das erfindungsgemäße Verfahren ist nicht auf das Ausführungsbeispiel beschränkt, sondern kann bei unterschiedlichsten Übertragungsverfahren - beispielsweise unterschiedliche Ein-oder- Mehrträgerfrequenzverfahren mit unterschiedlichen Trägermodulationen - sowie unterschiedlichsten Leitungstypen - 2-Draht- und 4-Draht-Leitungen - eingesetzt werden.

## Patentansprüche

1. Verfahren zum Optimieren der Datenübertragung über Leitungen (L),
- bei dem für unterschiedliche gespeicherte Leitungsparameter (lp') von Leitungen (L) zumindest ein Übertragungsverfahren (BB1, BB2) mit zumindest einer die maximale Datendurchsatzrate repräsentierenden Übertragungsgeschwindigkeit ermittelt und gespeichert wird,
- bei dem mit Hilfe zumindest eines Übertragungsverfahrens (BB1, BB2) über eine Leitung (L) deren Leitungsparameter (lp) gemessen werden,
- bei dem dasjenige Übertragungsverfahren (BB1, BB2) mit derjenigen Übertragungsgeschwindigkeit ausgewählt wird, bei dem die größte Übereinstimmung der gemessenen mit den gespeicherten Leitungsparametern (1p, 1p') festgestellt wird.

2. Verfahren nach Anspruch 1, **dadurch gekennzeichnet, dass** die Leitungsparameter (1p) durch die Dämpfung und Laufzeit (1z) der Leitung und durch Störsignale (rs) auf einer Leitung (L) repräsentiert sind.

3. Verfahren nach Anspruch 2, **dadurch gekennzeichnet, dass** die Laufzeit (lz) durch eine Messung der Phasendifferenz (pd) zwischen zwei eines nach einem Übertragungsverfahren (BB1, BB2) gebildeten Signals (ts) mit unterschiedlichen Frequenzen ermittelt wird.

4. Verfahren nach einem der vorhergehenden Ansprüche, **dadurch gekennzeichnet,**
**dass** die maximale Datendurchsatzrate für unterschiedliche Leitungsparameter (lp') mit unterschiedlichen Übertragungsverfahren (BB1,BB2) und Übertragungsgeschwindigkeiten durch Auswahl derjenigen Übertragungsverfahren (BB1, BB2) bestimmt werden, in deren Frequenzbereich die Leitungsparameter (lp) von Dämpfung und Laufzeit (lz) die geringsten Schwankungen aufweisen und bei dem sich zusätzlich die Störung eines gemessenen Störsignals (rs) am geringsten auswirkt, und dass die die maximale Durchsatzrate repräsentierenden Leitungsparameter (lp') gespeichert werden.

5. Verfahren nach einem der vorhergehenden Ansprüche, **dadurch gekennzeichnet,**
**dass** vor Beginn einer Datenübertragung eine Messprozedur eingeleitet wird, mit deren Hilfe
a) ein Ende der Leitung (L) als Zentrale und das andere als Dezentrale bestimmt wird,
b) vor der Messung der Leitungsparameter (lp) der Störbelag bzw. das Grundrauschen (rs) der Leitung (L) gemessen wird,
c) nach Analyse des gemessene Störbelags durch die Zentrale ein Übertragungsverfahren (BB1,BB2) ausgewählt und der Dezentralen mitgeteilt wird,
d) nach Maßgabe von gespeicherten Leitungsparametern (lp) für das ausgewählte Übertragungsverfahren (BB1,BB2) von der Zentrale jeweils ein vorgegebenes Testsignal (ts) mit zwei unterschiedlichen Frequenzen ausgesandt und von der Dezentrale die Leitungsparameter (1p) des Testsignals (ts) gemessen, worauf von der Dezentrale ein Testsignal (ts) an die Zentrale übermittelt wird,
e) bei der Zentrale die Dämpfung des Testsignals (ts) gemessen und in Abhängigkeit von der gemessenen Dämpfung weitere Testsignale (ts) mit zwei weiteren unterschiedlichen Frequenzen an die Dezentrale übermittelt werden,
f) die Schritte d) und e) solange wiederholt werden, bis die gespeicherten Leitungsparameter (lp) abgearbeitet sind, und
g) die gemessenen Leitungsparameter (lp) mit den gespeicherten Leitungsparametern (lp') verglichen und in Abhängigkeit vom Vergleichsergebnis das Übertragungsverfahren (BB1, BB2)und die Übertragungsgeschwindigkeit bestimmt wird.

6. Verfahren nach Anspruch 5, **dadurch gekennzeichnet, dass** die gespeicherten Leitungsparameter (lp') in Tabellen (T1..Tn) gespeichert werden, wobei die Tabellen (Tl...Tn, TD) den unterschiedlichen Übertragungsverfahren (BB1, BB2) mit unterschiedlichen Übertragungsgeschwindigkeiten zugeordnet sind, und dass die Auswahl eines Übertragungsverfahrens (BB1, BB2) zum Ermitteln der Leitungsparameter (lp) und zur Ermittlung des Übertragungsverfahrens mit der maximalen, Durchsatzrate durch Vergleich der ermittelten Leitungsparameter (lp) mit den in den Tabellen (Tl..Tn,TD) gespeicherten Leitungsparametern (lp') erfolgt.

7. Verfahren nach Anspruch einem der vorhergehenden Ansprüche,
**dadurch gekennzeichnet,**
**dass** die Übertragungsverfahren (BB1.BB2) durch synchrone bzw. asynchrone Basisband-Übertragungsverfahren (BB1, BB2) oder durch ein Ein- oder Mehrträgerfrequenz-Übertragungsverfahren repräsentiert sind.

8. Verfahren nach Anspruch 7, **dadurch gekennzeichnet, dass** als Basisband-Übertragungsverfahren das AMI-, HDB3-, Coded Diphase oder 2B1Q-Verfahren und als Trägerfrequenz-Übertragungsverfahren das QAM-Verfahren mit unterschiedlicher Stufenzahl und das Phasendifferenzverfahren vorgesehen ist.

9. Übertragungseinheit zum Optimieren der Datenübertragung über zumindest eine daran anschließbare Leitung (L)
- mit Mittel (ME, UM) zum Ermitteln und Speichern zumindest eines Übertragungsverfahren (BB1, BB2) mit zumindest einer die maximale Datendurchsatzrate repräsentierenden Übertragungsgeschwindigkeit für unterschiedliche gespeicherte Leitungsparameter (1p') von Leitungen (L)
- mit Auswertemittel (ME, UM) zum Messen von Leitungsparametern (lp) einer Leitung (L) mit Hilfe zumindest eines Übertragungsverfahren (BB1, BB2)
- wobei die Auswertemittel (ME) derart ausgestaltet sind dass dasjenige Übertragungsverfahren (BB1, BB2) mit derjenigen Übertragungsgeschwindigkeit ausgewählt wird, bei dem die größte Überstimmung der gemessenen mit den gespeicherten Leitungsparametern (1p,1p') festgestellt wird.

10. Kommunikationsanordnung zum Optimieren der Datenübertragung über Leitungen (L),
- mit Mittel (ME, UM) zum Ermitteln und Speichern zumindest eines Übertragungsverfahrens (BB1, BB2) mit zumindest einer die maximale Datendurchsatzrate repräsentierenden Übertragungsgeschwindigkeit für unterschiedliche gespeicherte Leitungsparamter (lp') von Leitungen (L)
- mit Auswertemittel (ME,UM) zum Messen von Leitungsparametern (lp) einer Leitung (L) mit Hilfe zumindest eines Übertragungsverfahrens (BB1,BB2)
- wobei die Auswertemittel (ME) derart ausgestaltet sind, dass dasjenige Übertragungsverfahren (BB1,BB2) mit derjenigen Übertragungsgeschwindigkeit ausgewählt wird, bei dem die größte Überstimmung der gemessenen mit den gespeicherten Leitungsparametern (1p,1p') festgestellt wird, und
- wobei die Mittel zum Ermitteln und Speichern (UM) und die Auswertemittel (ME) in jeweils mit den Enden der Leitung (L) verbundenen Übertragungseinheiten (UE) angeordnet sind,

11. Kommunikationsanordnung nach Anspruch 10,
**dadurch gekennzeichnet,**
**dass** an die eine Übertragungseinheit (UE) ein Kommunikationsendgerät (KE) und an die andere Übertragungseinheit (UE) ein Kommunikationssystem angeschlossen ist.

## Claims

1. Method for optimising the data transmission via lines (L)
- with which for different stored line parameters (lp') of lines (L) at least one transmission method (BB1, BB2) having at least one transmission speed representing the maximum data throughput rate is determined and stored,
- with which with the aid of at least one transmission method (BB1, BB2) via a line (L) the line parameters (lp) of said line (L) are measured,
- with which that transmission method (BB1, BB2) is selected with that transmission speed at which the greatest conformity of the measured with the stored line parameters (lp, lp') is determined.

2. Method according to claim 1, **characterised in that** the line parameters (lp) are represented by the attenuation and delay time (lz) of the line and by interfering signals (rs) on a line (L).

3. Method according to claim 2, **characterised in that** the delay time (lz) is determined by a measurement of the phase difference (pd) between two [lacuna] of a signal (ts) formed according to a transmission method (BB1, BB2), said signal (ts) having different frequencies.

4. Method according to one of the preceding claims,
**characterised in that**
the maximum data throughput rates are determined for different line parameters (lp') having different transmission methods (BB1, BB2) and transmission speeds by selecting that transmission method (BB1, BB2), in the frequency range of which the line parameters (lp) of attenuation and delay time (lz) feature the most minimal fluctuations, and with which the interference of a measured interfering signal (rs) additionally has the least impact, and that the line parameters (lp') representing the maximum throughput rate are stored.

5. Method according to one of the preceding claims,
**characterised in that**
a measurement procedure is initiated prior to the start of a data transmission, with the aid of which:
a) one end of the line (L) is determined as a master and the other end of the line as a slave,
b) the interference characteristics and/or the basic noise (rs) of the line is measured prior to measurement of the line parameters (lp),
c) after analysis of the measured interference characteristics by the master, a transmission method (BB1, BB2) is selected and the slave is notified,
d) according to stored line parameters (lp) for the selected transmission method (BB1,BB2), a predetermined test signal (ts) having two different frequencies is transmitted from the master and the line parameters (lp) of the test signal (ts) are measured by the slave, whereupon a test signal (ts) is transmitted to the master from the slave,
e) at the master, the attenuation of the test signal (ts) is measured and further test signals (ts) having two further different frequencies are transmitted to the slave as a function of the measured attenuation,
f) the steps d) and e) are repeated until the stored line parameters (lp) are processed and
g) the measured line parameters (lp) are compared with the stored line parameters (lp') and the transmission method (BB1, BB2) and the transmission speed are determined as a function of the comparison result.

6. Method according to claim 5, **characterised in that** the stored line parameters (lp') are stored in tables (Tl..Tn), with the tables (Tl...Tn, TD) being assigned to the different transmission methods (BB1, BB2) having different transmission speeds, and that the selection of a transmission method (BB1, BB2) is carried out in order to determine the line parameters (lp) and to determine the transmission method having the maximum throughput rate by comparing the determined line parameters (lp) with the line parameters (lp') stored in the tables (Tl .. Tn, TD) .

7. Method according to one of the preceding claims,
**characterised in that**
the transmission methods (BB1, BB2) are represented by synchronous and/or asynchronous base band transmission methods (BB1, BB2) or by a single-carrier or multicarrier frequency transmission method.

8. Method according to claim 7, **characterised in that** the AMI, HDB3, Coded Diphase or 2BiQ method is provided as the base band transmission method and the QAM method having different numbers of stages and the phase difference method is provided as a carrier frequency transmission method.

9. Transmission unit for optimising the data transmission via at least one line (L) which can be connected thereto
- having means (ME, UM) for determining and storing at least one transmission method (BB1, BB2) having at least one transmission speed representing the maximum data throughput rate for different stored line parameters (lp') of lines (L)
- having evaluation means (ME, UM) for measuring line parameters (lp) of a line (L) with the aid of at least one transmission method (BB1, BB2)
- with the evaluation means (ME) being designed such that that transmission method (BB1, BB2) is selected with that transmission speed at which the greatest conformity of the measured with the stored line parameters (lp, lp') is determined.

10. Communication arrangement for optimising the data transmission via lines (L)m
- having means (ME, UM) for determining and storing at least one transmission method (BB1, BB2) having at least one transmission speed representing the maximum data throughput rate for different stored line parameters (lp') of lines (L)
- having evaluation means (ME, UM) for measuring line parameters (lp) of a line (1) with the aid of at least one transmission method (BB1, BB2)
- with the evaluation means (ME) being designed such that that transmission method (BB1, BB2) is selected with that transmission speed at which the greatest conformity of the measured with the stored line parameters (lp, lp') is determined, and
- with the means for determining and storing and the evaluation means (M) being arranged in transmission units (UE) connected to the ends of the line (L) in each instance.

11. Communication arrangement according to claim 10,
**characterised in that**
a communication device (KE) is connected to one transmission unit (UE) and a communication system is connected to the other transmission unit (UE).

## Revendications

1. Procédé pour optimiser la transmission de données par des lignes (L),
- dans lequel, pour différents paramètres de ligne (1p') stockés de lignes (L), au moins un procédé de transmission (BB1, BB2) est déterminé et stocké avec au moins une vitesse de transmission représentant le débit de données maximum,
- dans lequel à l'aide d'au moins un procédé de transmission (BB1, BB2) par une ligne (L) les paramètres de ligne (1p) de celle-ci sont mesurés,
- dans lequel on choisit le procédé de transmission (BB1, BB2) avec la vitesse de transmission dans lequel on constate la plus grande concordance des paramètres de ligne mesurés avec les paramètres de ligne (lp, lp') stockés.

2. Procédé selon la revendication 1, **caractérisé en ce que**, les paramètres de ligne (lp) sont représentés par l'amortissement et le temps de propagation (lz) de la ligne et par des signaux parasites (rs) sur une ligne (L).

3. Procédé selon la revendication 2, **caractérisé en ce que**, le temps de propagation (lz) est déterminé par une mesure de la différence de phase (pd) entre deux signaux (ts) formés selon un procédé de transmission (BB1, BB2), avec différentes fréquences.

4. Procédé selon l'une quelconque des revendications précédentes, **caractérisé en ce que**
le débit de données maximum est déterminé pour différents paramètres de ligne (lp') avec différents procédés de transmission (BB1, BB2) et différentes vitesses de transmission par le choix des procédés de transmission (BB1, BB2) dans la plage de fréquences desquels les paramètres de ligne (lp) de l'amortissement et du temps de propagation (lz) présentent les plus faibles variations et dans laquelle en supplément la perturbation d'un signal parasite (rs) mesuré est la plus faible et **en ce que** les paramètres de ligne (lp') représentant le débit maximum sont stockés.

5. Procédé selon l'une quelconque des revendications précédentes, **caractérisé en ce que**
avant de commencer une transmission de données, on met en oeuvre une procédure de mesure à l'aide de laquelle
a) une extrémité de la ligne (L) est définie comme centrale et l'autre comme décentrale,
b) avant la mesure des paramètres de ligne (1p'), le revêtement parasite resp. le bruit de base (rs) de la ligne (L) est mesuré,
c) après l'analyse du revêtement parasite mesuré, un procédé de transmission (BB1, BB2) est choisi par la centrale et communiqué à la décentrale,
d) en fonction des paramètres de ligne (lp) stockés pour le procédé de transmission (BB1, BB2) choisi, la centrale envoie à chaque fois un signal test (ts) prédéfini avec deux fréquences différentes et les paramètres de ligne (lp) du signal test (ts) sont mesurés par la décentrale, après quoi la décentrale transmet un signal test (ts) à la centrale,
e) l'amortissement du signal test (ts) est mesuré à la centrale et d'autres signaux test (ts) sont transmis, en fonction de l'amortissement mesuré avec deux autres fréquences différentes à la décentrale,
f) les étapes d) et e) sont répétées jusqu'à ce que les paramètres de ligne (lp) mémorisés soient traités, et
g) les paramètres de ligne (lp) mesurés sont comparés avec les paramètres de ligne (lp') stockés et le procédé de transmission (BB1, BB2) et la vitesse de transmission sont définis en fonction du résultat de la comparaison.

6. Procédé selon la revendication 5, **caractérisé en ce que** les paramètres de ligne (lp') stockés sont stockés dans des tableaux (T1...Tn), les tableaux (T1...Tn, TD) étant attribués aux différents procédés de transmission (BB1, BB2) avec différentes vitesses de transmission, et **en ce que** le choix d'un procédé de transmission (BB1, BB2) pour déterminer les paramètres de ligne (lp) et pour déterminer le procédé de transmission avec le débit maximal s'effectue par comparaison des paramètres de ligne (lp) déterminés avec les paramètres de ligne (lp') stockés dans les tableaux (T1...Tn, TD).

7. Procédé selon l'une quelconque des revendications précédentes,
**caractérisé en ce que**
les procédés de transmission (BB1, BB2) sont représentés par des procédés de transmission en bande de base synchrones resp. asynchrones (BB1, BB2) ou par un procédé de transmission en fréquence monoporteuse ou multiporteuse.

8. Procédé selon la revendication 7, **caractérisé en ce que** le procédé AMI-, HDB3-, Coded Diphase ou 2B1Q est prévu comme procédé de transmission en bande de base et le procédé QAM avec un nombre de niveaux différent et le procédé de différence de phase sont prévus comme procédés de transmission en fréquence porteuse.

9. Unité de transmission pour l'optimisation de la transmission de données par au moins une ligne (L) pouvant y être raccordée
- avec des moyens (ME, UM) pour déterminer et stocker au moins un procédé de transmission (BB1, BB2) avec au moins une vitesse de transmission représentant le débit de données maximum pour différents paramètres de ligne (lp') stockés de lignes (L)
- avec des moyens d'analyse (ME, UM) pour la mesure des paramètres de ligne (lp) d'une ligne (L) à l'aide d'au moins un procédé de transmission (BB1, BB2)
- les moyens d'analyse (ME) étant conçus de telle sorte que le procédé de transmission (BB1, BB2) est choisi avec la vitesse de transmission, dans lequel la concordance maximale des paramètres de ligne mesurés avec les paramètres de ligne (lp, lp') stockés est constatée.

10. Agencement de communication pour l'optimisation de la transmission de données au moyen de lignes (L),
- avec des moyens (ME, UM) pour déterminer et stocker au moins un procédé de transmission (BB1, BB2) avec au moins une vitesse de transmission représentant le débit de données maximal pour différents paramètres de ligne (lp') stockés de lignes (L)
- avec des moyens d'analyse (ME, UM) pour la mesure de paramètres de ligne (lp) d'une ligne (L) à l'aide d'au moins un procédé de transmission (BB1, BB2)
- les moyens d'analyse (ME) étant conçus de telle sorte qu'on choisit le procédé de transmission (BB1, BB2) avec la vitesse de transmission, dans lequel la plus grande concordance des paramètres de ligne mesurés avec les paramètres de ligne stockés (1p, 1p') est constatée,
- les moyens (UM) pour déterminer et stocker et les moyens d'analyse (ME) étant disposés dans des unités de transmission (UE) reliées respectivement aux extrémités de la ligne (L).

11. Agencement de communication selon la revendication 10,
**caractérisé en ce que**
un terminal de communication (KE) est raccordé à une unité de transmission (UE) et un système de communication est raccordé à l'autre unité de transmission (UE).
